# EUROPÄISCHE PATENTSCHRIFT

(11) **EP 4 081 719 B1**
(45) Veröffentlichungstag und Bekanntmachung des Hinweises auf die Patenterteilung: **01.05.2024**
(21) Anmeldenummer: 21703657.3
(22) Anmeldetag: 04.02.2021
(51) Int. Cl.: G01B 17/00, F16C 33/58, F16C 19/52, F16C 41/00, F16C 43/04, F16C 19/38, G01B 7/14

(54) **WÄLZLAGER MIT ÜBERWACHUNGSVORRICHTUNG**
ROLLING BEARING WITH MONITORING DEVICE
PALIER À ROULEMENT DOTÉ D'UN DISPOSITIF DE SURVEILLANCE

(30) Priorität: 11.02.2020 DE 102020103421
(43) Veröffentlichungstag der Anmeldung: 02.11.2022
(60) Teilanmeldung: 24165634.7
(73) Patentinhaber: Liebherr-Components Biberach GmbH, 88400 Biberach an der Riß (DE)
(72) Erfinder: BORN, Oliver, 89281 Altenstadt (DE); SCHIERHOLZ, Lennart, 88400 Biberach an der Riß (DE); HALDER, Wolfram, 88527 Unlingen (DE); DAHL, Martin, 88400 Biberach an der Riß (DE); FUCHS, Michael, 89542 Herbrechtingen (DE)
(74) Vertreter: Thoma, Michael
(86) Internationale Anmeldenummer: PCT/EP2021/052594
(87) Internationale Veröffentlichungsnummer: WO 2021/160500

(56) Entgegenhaltungen:
- EP-A1- 2 743 522
- EP-A2- 1 873 508
- DE-A1- 19 919 006
- DE-A1-102008 046 357
- DE-A1-102016 206 734
- DE-C1- 19 755 000
- JP-A- 2006 317 420
- JP-A- 2012 067 907

## Beschreibung

Die vorliegende Erfindung betrifft die Überwachung von Wälzlagern, insbesondere in Form von mittenfreien Großwälzlagern mittels einer Überwachungsvorrichtung, die einen berührungslos arbeitenden Sensor besitzt. Die Erfindung betrifft dabei insbesondere ein Wälzlager mit zwei Lagerringen und zwischen diesen laufenden Wälzkörpern, sowie einem Sensor zum Erfassen von Relativbewegungen und/oder -stellungen der Lagerringe zueinander, wobei der Sensor an einem der Lagerringe befestigt und auf eine Messfläche am anderen Lagerring gerichtet ist.

Großwälzlager können Durchmesser von einem Meter oder mehr oder auch mehreren Metern aufweisen und sind oft mittenfrei ausgebildet, sodass die Mittenbohrung des inneren Lagerrings im Wesentlichen frei bleibt und nicht auf einer massiven Welle sitzt. Die zwei zueinander verdrehbaren, konzentrischen Laufringe, zwischen denen in einem Lagerspalt eine Vielzahl von Wälzkörpern angeordnet sein kann, beispielsweise ein oder mehrere Axiallager und/oder ein oder mehrere Radiallager, können dabei bisweilen durch einen oder mehrere Drehantriebe relativ zueinander verdrehbar sein, wobei beispielsweise einer der Laufringe mit einer Verzahnung versehen ist und der andere Laufring einen oder mehrere Antriebsmotoren trägt. Wenigstens einer der Lagerringe kann über eine üblicherweise parallel zur Drehachse des Lagers angeordnete Schraubverbindung mit einem Anschlussflansch des den Lagerring tragenden Bauteils verbunden werden.

Solche Großwälzlager werden ein- oder mehrreihig mit verschiedenen Wälzkörpern wie Kugeln, Wälzzylindern, Wälzkegeln etc. ausgeführt und finden bei Kranen, Baggern, Tagebau-Abraumgeräten oder Windenergieanlagen Verwendung.

Aufgrund der hohen abzustützenden Kräfte und Biegemomente unterliegen die genannten Lagerringe Verwindungen und Verformungen und können zueinander verkippen, wobei sich durch die hohen wirkenden Kräfte auch ein entsprechender Lagerverschleiß einstellt.

Um den Verschleiß möglichst zu begrenzen bzw. zu reduzieren, ist bei solchen Großwälzlagern eine dauerhafte und verlässliche Schmierung wichtig, da ansonsten aufgrund der sehr hohen Belastungen und auch der oft recht speziellen Einsatzbedingungen, die mit Umwelteinflüssen wie Salzsprühnebel, Starkregen, Staub und Temperaturschwankungen einhergehen, recht schnell Schäden an den Laufbahnen und den Wälzkörpern entstehen. Aufgrund der oft recht geringen Drehgeschwindigkeiten ist eine gleichmäßige Schmierung jedoch schwierig. Die Drehzahlen liegen bei Großwälzlagern oft unter 250 U/min, wobei in vielen Einsatzfällen die Lager häufig auch über lange Zeitspannen gänzlich still stehen oder immer wieder in dieselbe Stellung zurückkehren, wie dies beispielsweise bei Pitchwinkel-Lagern an Rotorblättern einer Windkraftanlage der Fall ist, da dort häufig derselbe Pitchwinkel eingestellt ist. Bei solchen langsam drehenden und/oder oft stillstehenden Großwälzlagern verteilt sich der Schmierstoff schwer gleichmäßig über das gesamte Lager und insbesondere die stark belasteten Wälzkörper und damit in Eingriff stehenden Laufbahnabschnitte sind stark belastet.

Beispielsweise zeigt die Schrift EP 20 92 204 B1 ein solches Großwälzlager, bei dem ein Laufring einen Nasenring besitzt, der in eine Nut im anderen Laufring eingreift und durch gegenüberliegende Axial- und Radiallager dort abgestützt ist. Ein ähnliches Großwälzlager und dessen Einbausituation am Stützmast eines Schiffskrans zeigt die Schrift WO 2008/088213 A2.

Um über den fortschreitenden Verschleiß informiert zu bleiben und/oder Wartungs- und Reparaturmaßnahmen wie Nachschmieren, Austauschen von Wälzkörpern etc. rechtzeitig planen zu können, werden Wälzlager mittels Überwachungsvorrichtungen überwacht, die verschleißanzeigende Lagerreaktionen wie axiale Lagerbewegungen der Lagerringe zueinander oder Kippbewegungen der Lagerringe bestimmen, sodass aus deren Vorhandensein oder deren Größe auf den Verschleißzustand geschlossen werden kann. Gleichzeitig ist es auch hilfreich, die Drehstellung und/oder Drehzahl und/oder die zurückgelegten Umdrehungen bzw. Drehwinkel zu kennen, da beispielsweise auch die zurückgelegten Umdrehungen einen Indikator für einen möglichen Verschleiß bilden oder Ringversatzbewegungen in einer bestimmten Drehwinkelstellung Rückschlüsse auf beschädigte Laufringabschnitte geben können.

Aus der Schrift EP 15 28 356 B1 ist eine Überwachungsvorrichtung zum Überwachen von Großwälzlagern bekannt, die mehrere Wegmesssensoren umfasst, um Kippbewegungen der Lagerringe zueinander zu ermitteln. Dabei erfasst ein Wegmesssensor Radialbewegungen beispielsweise in Form von Veränderungen eines Radialspalts und ein anderer Wegmesssensor Axialbewegungen, die sich in Form von Veränderungen eines Axialspalts niederschlagen, um aus den erfassten Radial- und Axialbewegungen das Verkippen der Lagerringe zueinander zu bestimmen. Die genannten Sensoren sind jeweils in einer Bohrung in einem der Lagerringe versenkt und beobachten eine gegenüberliegende Messfläche am anderen Lagerring, wobei die genannten Sensoren berührungslos den Abstand des Sensorkopfes von der gegenüberliegenden Messfläche bestimmen.

Aus der Schrift US 5,336,996 B ist eine Überwachungsvorrichtung bekannt, die neben radialem und axialem Verschleiß des Lagers auch die Drehrichtung und - geschwindigkeit bestimmen kann. Hierzu sind an einem Drehring umfangsflächenseitig in Umfangsrichtung verteilt eine Vielzahl an Magnetelementen eingelassen, die von einem gegenüberliegend vorgesehenen Hall-Sensor erfasst werden können. Dabei wird zum einen durch das Vorbeilaufen der mehreren Magnete an dem Hall-Sensor die Drehrichtung und die Drehgeschwindigkeit bestimmt. Zusätzlich wird aus der Überdeckung zwischen den Magnetplättchen und dem Hall-Sensor ein Axialversatz bestimmt.

Aus der Schrift EP1873508 A2 ist ein Wälzlager bekannt, bei dem eine axiale Verschiebung der Lagerringe durch die Differenz der von zwei axial benachbarten Sensoren gelieferten Werte erfasst wird.

Die in der Praxis bislang verwendeten Überwachungsvorrichtungen sind üblicherweise recht teuer und aufwändig zu verkabeln. Insbesondere wenn mit mehreren Sensoren sowohl Radial- als auch Axialbewegungen erfasst werden sollen, wird nicht nur für die Verkabelung, sondern auch für die Sensoren recht viel Bauraum benötigt.

Gleichzeitig ist es aufwändig und teuer, die Sensorik gegen äußere Einflüsse und Beschädigungen zu schützen, was gleichwohl notwendig ist, da üblicherweise die gesamte Sensorik ausfällt, wenn auch nur ein Sensor kaputt geht.

Gleichzeitig ist eine hohe Messgenauigkeit nur mit großem Aufwand erreichbar. Beispielsweise muss bei Messsystemen, die auf einer schrägen Fläche messen, um axiale und radiale Bewegungen bestimmen zu können, der Schrägungswinkel mit hoher Genauigkeit gefertigt werden und bekannt sein, da andernfalls Toleranzfehler sehr leicht auftreten.

Der vorliegenden Erfindung liegt daher die Aufgabe zugrunde, eine verbesserte Überwachungsvorrichtung zum Überwachen von Wälzlagern sowie ein verbessertes Wälzlager mit einer solchen Überwachungsvorrichtung zu schaffen, die Nachteile des Standes der Technik vermeiden und letzteren in vorteilhafter Weise weiterbilden. Insbesondere soll eine platzsparende, einfach zu verbauende und dennoch genaue Überwachungsvorrichtung geschaffen werden, die auch unter widrigen Einsatzbedingungen Lagerverschleiß und/oder Lagerverformungen und/oder Lagerdrehwinkel bzw. -geschwindigkeiten verlässlich und präzise erfassen bzw. bestimmen kann.

Erfindungsgemäß wird die genannte Aufgabe durch ein Wälzlager gemäß Anspruch 1 gelöst. Bevorzugte Ausgestaltungen sind Gegenstand der abhängigen Ansprüche.

Es wird also nach einem Aspekt der vorliegenden Erfindung vorgeschlagen, die vom Sensor berührungslos abgetastete Messfläche am Lagerring in bestimmter Weise auszubilden, um auch bei kleineren Positionsverschiebungen bzw. Bewegungen der Lagerringe zueinander eine ausreichende, präzise identifizierbare Signalveränderung im Antwortsignal zu erzeugen. Dies geht von der Überlegung aus, dass bei dem bislang erfolgenden Abtasten glatter Ringoberflächen an sich nur eine Abstandsmessung möglich ist oder bestimmte, insbesondere magnetisierte Oberflächen verwendet werden müssen, um eine ausreichende Signaländerung zu erzielen. Erfindungsgemäß umfasst die genannte Messfläche am Lagerring, auf die der am anderen Lagerring befestigte Sensor gerichtet ist, einen zum Sensor vorspringenden Konturvorsprung der das Messsignal beeinflusst und/oder deren/dessen Bewegung relativ zum Sensor dessen Messsignal verändert. Durch einen speziell ausgebildeten Konturvorsprung kann nicht nur der Abstand des Sensorkopfs von der gegenüberliegenden Messoberfläche bzw. die Spaltbreite, sondern die Position und Bewegung des besagten Konturvorsprungs und/oder der Konturausnehmung quer zur Blickrichtung des Sensors erfasst werden.

Die genannten Konturvorsprünge sind dabei vorteilhafterweise nicht harmonisch abgerundet oder sanft hügelig ausgebildet, sondern scharfkantig konturiert, um eine einfachere und präzise Erfassung zu ermöglichen. Insbesondere kann als Konturvorsprung eine längliche, schmale Leiste vorgesehen sein, die von der vom Sensor beobachteten Lagerringoberfläche vorspringt und mit einer schmalen Stirnseite auf den Sensor ausgerichtet ist bzw. zum Sensor hin vorspringt.

Eine nicht erfindungsgemäße Anternative zu einer solchen dünnwandigen Leiste kann als Konturausnehmung vorteilhafterweise eine schmale Nut und/oder ein bohrungsartiges Loch in der vom Sensor beobachteten Lagerringoberfläche eingesenkt bzw. ausgebildet sein, wobei die genannte Nut bzw. das genannte Loch mit ihrer/seiner offenen Seite dem Sensor zugewandt und mit ihrer/seiner Tiefe vom Sensor weggehend ausgebildet sein kann.

Vorteilhafterweise besitzt die vorspringende zumindest eine gerade oder bogenförmige Kante, was sich positiv auf die gewünschte Beeinflussung des Abtastsignals auswirkt.

Die genannten Konturvorsprünge sind insbesondere derart ausgebildet, dass sie das Sensorsignal beeinflussen und die Signalantwort verändern, wenn die Kontur quer zur Blickrichtung des Sensors an diesem vorbeibewegt wird und/oder sich die Position der Kontur quer zur Blickrichtung des Sensors verändert. Mit Blickrichtung des Sensors ist die Hauptachse des Abtastsignals gemeint, wobei der Sensor insbesondere derart montiert sein kann, dass die genannte Blickrichtung im Wesentlichen senkrecht auf die gegenüberliegende Oberfläche des Lagerrings gerichtet ist.

Der genannte Konturvorsprung kann grundsätzlich materialhomogen und integral einstückig von dem Material des Lagerrings gebildet sein. Beispielsweise kann ein Vorsprung in Form einer Leiste oder eines Stegs durch Abtragen der benachbarten Oberflächenbereiche aus der Ringoberfläche herausgearbeitet werden oder auch in anderer Weise materialhomogen daran angeformt werden, beispielsweise beim Schmieden und/oder Gießen oder einem anderen Bearbeitungsschritt. In ähnlicher Weise kann beispielsweise eine längliche, schmale Messnut in der Ringoberfläche ausgefräst oder ausgedreht werden, oder in anderer Weise darin eingebracht werden, sodass die Oberflächen der vorspringenden Kontur unmittelbar von dem Material des Lagerrings gebildet ist.

Alternativ kann das vorspringende Konturelement aber auch zumindest teilweise von einem separaten, an dem Lagerring fest angebrachten Konturelement gebildet sein. Beispielsweise kann ein stegförmiges Plättchen vorstehend an der sensorisch abgetasteten Ringoberfläche angebracht werden, beispielsweise in einen Schlitz eingesteckt werden, sodass ein aus dem Schlitz hervorstehender Leistenabschnitt noch zum Sensor hin vorspringt.

Ein solches separates Konturelement kann grundsätzlich aus dem gleichen Material bestehen wie der Lagerring. Alternativ kann das separate Konturelement aber auch aus einem anderen Material gefertigt sein. Beispielsweise kann das genannte Konturelement ein Metallplättchen, beispielsweise aus einer anderen Legierung als der Lagerring, oder auch ein magnetisches Element sein.

Alternativ oder zusätzlich kann die vorspringende Messkontur aber auch aus einer Mischform bestehen, die eine materialhomogen, integral einstückig am Lagerring ausgebildete Teilkontur und von einem separaten Konturelement gebildete Teilkontur umfasst. Beispielsweise kann ein separat ausgebildeter Stegvorsprung, der an der sensorisch abgetasteten Ringoberfläche befestigt ist, neben einer Reihe von Sacklöchern vorgesehen sein, um einerseits axiale Verschiebungen der Lagerringe und andererseits die Drehstellung und/oder den Drehwinkel und/oder die Drehgeschwindigkeit der Lagerringe relativ zueinander erfassen zu können.

Insbesondere kann die vorspringende Messkontur auch Konturabschnitte aus verschiedenen Materialien umfassen, die das Messsignal in unterschiedlicher Weise verändern.

Werden verschiedenen Materialien zur Bildung verschiedener Konturabschnitte verwendet, kann es vorteilhaft sein, wenn die von den verschiedenen Materialien gebildeten Oberflächenkonturen zueinander geneigt und/oder unter einem unterschiedlichen Winkel bezüglich der Sensorblickrichtung angestellt sind. Beispielsweise kann eine im Querschnitt V-förmige oder sägezahnförmige Nut mit einem Füllmaterial befüllt sein, dessen Oberfläche im Wesentlichen parallel zu der Umgebungsoberfläche am Lagerring ist. Hierdurch kann die schräge Boden- bzw. Wandungskontur der Nut abgetastet und gleichzeitig die zur Sensorblickrichtung senkrechte Füllmaterialkontur abgetastet werden.

Alternativ oder zusätzlich kann aber auch eine vorspringende Kontur aus einem unterschiedlichen Material ausgebildet werden, beispielsweise durch Aufkleben eines Messkonturstreifens, der aus einem anderen Material als der Lagerring bestehen kann.

Die vorspringende ausgebildete Messkontur kann in verschiedener Weise ausgebildet sein, um verschiedene Lagermessgrößen bestimmen zu können.

Insbesondere können der Sensor und die damit zusammenarbeitende Messkontur dazu ausgebildet sein, die axiale Position der beiden Lagerringe zueinander zu bestimmen. Bei Großwälzlagern ist üblicherweise eine Axialverschiebung der beiden Lagerringe zueinander ein verlässliches Maß für den Lagerverschleiß, da aufgrund hoher Axialkräfte vorrangig Axialverschleiß auftritt und sich dieser in einer Verschiebung der Lagerringe in axialer Richtung zueinander niederschlägt.

Um die Axialstellung der beiden Lagerringe exakt messen zu können, kann vorteilhafterweise der Sensor eine Umfangsfläche des anderen Lagerrings beobachten bzw. abtasten, wobei an der abgetasteten Umfangsfläche der genannte, vorzugsweise leisten- oder stegförmige Konturvorsprung vorgesehen sein kann.

Der umfangsflächenseitige Konturvorsprung kann insbesondere einen radial vorspringenden Steg bilden, der sich in einer Ebene senkrecht zur Lagerdrehachse erstrecken kann, wobei der genannte Steg bzw. Vorsprung umlaufend über den gesamten Umfang des Lagerrings ausgebildet sein kann. Alternativ kann es auch ausreichend sein, den Konturvorsprung nur in einem Ringsegment auszubilden, insbesondere wenn es sich um ein Lager handelt, welches signifikante Betriebszeiten, insbesondere Stillstandszeiten in einer bestimmten Lage besitzt, so wie dies beispielsweise die Nullstellung von Rotorblattlagern ist, die oft in einer bestimmten Pitchstellung gehalten werden.

Eine nicht erfindungsgemäße Anternative zu einem solchen in Umfangsrichtung verlaufenden, radial vorspringendem Steg kann in der genannten abgetasteten Umfangsfläche aber auch eine Nut eingearbeitet sein, die eine Vertiefung in der genannten Umfangsfläche bildet und sich vom Sensor weg in die genannte Umfangsfläche hineinstreckt. Eine solche Nut kann ebenfalls umlaufend über die gesamte Umfangsfläche ausgebildet sein und sich in einer radialen Ebene erstrecken. Alternativ kann es aber auch ausreichend sein, eine solche nur in einem Sektor des Lagerrings auszubilden.

Alternativ oder zusätzlich können der Sensor bzw. ein weiterer Sensor und die damit zusammenarbeitende Kontur der Messfläche aber auch dazu vorgesehen sein, Radialbewegungen der beiden Lagerringe zueinander zu bestimmen. Um solche Radialbewegungen bzw. Veränderungen in der Radialstellung der beiden Lagerringe zu erfassen, kann die Messfläche eine Axialfläche bilden, auf der ein vorzugsweise leistenförmiger Konturvorsprung axial vorspringen kann, wobei sich ein solcher Konturvorsprung parallel zu einer Zylinderfläche erstrecken kann und/oder in Umfangsrichtung auf der Axialfläche ausgebildet sein kann.

Eine nicht erfindungsgemäße Anternative kann in der genannten Axialfläche auch eine bogenförmig gekrümmte Nut eingesenkt bzw. eingearbeitet sein, die sich in Umfangsrichtung erstrecken bzw. parallel zu einer Zylinderfläche ausgebildet sein kann.

Der die genannte Axialfläche abtastende Sensor kann mit seiner Hauptabtastrichtung bzw. Blickrichtung parallel zur Drehachse auf die genannte Axialfläche gerichtet sein, um Querverschiebungen der kreisbogenförmigen Nut und/oder des kreisbogenförmigen Vorsprungs in Radialrichtung erfassen zu können.

Vorteilhafterweise kann also der Konturvorsprung an einer Lagerringoberfläche vorgesehen sein, die an sich parallel und/oder tangential zur Erfassung der Verschiebung ausgerichtet ist, so dass sich der Vorsprung quer zur Blickrichtung des Sensors bewegen. Eine Axialverschiebung wirkt somit durch Abtasten einer Umfangsfläche und eine Radialverschiebung durch Abtasten einer Axialfläche, die sich in einer Ebene senkrecht zur Lagerdrehachse erstreckt, bzw. der daran vorgesehenen Konturvorsprünge gemessen. Alternativ wäre es aber grundsätzlich auch möglich, eine Radialverschiebung beispielsweise durch eine Abstandsmessung zwischen dem Sensor und einer Umfangsfläche zu messen und/oder die Axialverschiebung durch eine Abstandsmessung zwischen dem Sensor und einer Axialfläche zu bestimmen. Dies wäre im Wesentlichen die Bestimmung des Spaltmaßes zwischen Sensor und gegenüberliegender Gegenmessfläche. Vorteilhafterweise können dabei auch Axialverschiebungen und Radialverschiebungen durch nur einen einzigen bestimmt werden, beispielsweise dadurch, dass der Sensor eine Umfangsfläche am gegenüberliegenden Lagerring beobachtet und einerseits die Axialverschiebung eines an der Umfangsfläche vorgesehenen Konturvorsprungs zu messen und andererseits den radialen Abstand zu der genannten Umfangsfläche bzw. dem daran vorgesehenen Konturvorsprung zu messen, um die Radialverschiebung zu bestimmen. Alternativ oder zusätzlich zur Messung von Relativbewegungen der Lagerringe zueinander in axialer Richtung und/oder radialer Richtung können der Sensor und die damit zusammenwirkende Messfläche aber auch dazu vorgesehen sein, die Drehstellung und/oder Drehbewegung und/oder Drehgeschwindigkeit der beiden Lagerringe zueinander zu messen. Hierzu können mehrere Konturvorsprünge vorgesehen sein, die in Umfangsrichtung voneinander beabstandet hintereinander bzw. nebeneinander angeordnet sind, so dass die genannten Konturvorsprünge beim Verdrehen der beiden Lageringe zueinander nacheinander an dem Sensor vorbeilaufen.

Die genannten Konturvorsprünge können dabei in vorteilhafter Weise in einer Umfangsfläche des vom Sensor abgetasteten Lagerrings ausgebildet sein, insbesondere in einer gemeinsamen Ebene, die sich senkrecht zur Lagerdrehachse erstreckt.

Die Konturvorsprünge zum Bestimmen der Drehstellung und/oder -geschwindigkeit können dabei unter gleichmäßiger Teilung voneinander beabstandet angeordnet sein und jeweils radial auf die Drehachse zu vorspringen.

Der Sensor kann in vorteilhafter Weise in einen der Lagerringe versenkt angeordnet sein, insbesondere vollständig versenkt, sodass der Sensor durch den umgebenden Korpus des Lagerrings vor äußeren Einwirkungen wie mechanischen Beanspruchungen geschützt ist.

Der Einbau des Sensors in den Lagerring kann dabei in radialer Richtung erfolgen, so dass sich eine Sensor-Längsachse im Wesentlichen radial zur Lagerdrehachse erstreckt.

In alternativer Weiterbildung der Erfindung wäre es aber auch möglich, den Sensor mit seiner Sensorlängsachse axial einzubauen, so dass sich die genannte Sensor-Längsachse im Wesentlichen parallel zur Lagerdrehachse erstreckt. Je nach Einbau des Sensors kann der zur Verfügung stehende Platz im Lagerring bestmöglich genutzt werden.

In vorteilhafter Weiterbildung der Erfindung kann der Sensor auf einer Seite aller Wälzkörper angeordnet sein, sodass nur auf einer Seite des Sensors Wälzkörper angeordnet sind, während auf der gegenüberliegenden Seite des Sensors keine Wälzkörper liegen.

Besitzt einer der Lagerringe eine Ringnase, die in einer Nut im anderen Lagerring aufgenommen und durch Wälzkörper im Spalt zwischen Nasenring und Nut abgestützt ist, kann der Sensor in einem Lagerringbereich angeordnet sein, der nicht den Nasenring und auch nicht die diesen aufnehmende Nut bildet, sondern benachbart zu dem besagten Nasenring liegt.

In alternativer Weiterbildung der Erfindung kann der Sensor aber auch zwischen Wälzkörperreihen angeordnet sein und/oder eine Messfläche zwischen Wälzkörperreihen beobachten. Beispielsweise kann der Sensor zwischen einer Radiallagerreihe und einer Axiallagerreihe angeordnet sein und eine Messfläche beobachten, die zwischen einer Axiallagerreihe und einer Radiallagerreihe liegt.

Der Sensor kann grundsätzlich verschieden arbeitend ausgebildet sein. Nach einer vorteilhaften Ausführung kann ein induktiver Sensor vorgesehen sein, um den Konturvorsprung und deren Position exakt zu erfassen. Der genannte Konturvorsprung kann aus einem leitfähigen und/oder ferromagnetischen Werkstoff bestehen, um das Signal passiv oder aktiv zu beeinflussen.

Beispielsweise kann ein metallischer Stegvorsprung vorgesehen sein, um das Signal des induktiven Sensors zu beeinflussen, wenn der genannte stegförmige Vorsprung relativ zum Sensor bewegt wird, was immer dann auftritt, wenn sich der Lagerring mit dem Vorsprung gegenüber dem Lagerring, an dem der Sensor befestigt ist, verschiebt. Alternativ kann beispielsweise ein ferromagnetisches Stegplättchen als Vorsprung am Lagerring befestigt sein, um das Messsignal des induktiven Sensors aktiv zu beeinflussen, wenn eine entsprechende Relativbewegung auftritt. Alternativ zu einem solchen induktiven Sensor kann aber auch ein anderer Sensor vorgesehen sein, beispielsweise ein Ultraschallsensor, ein optoelektrischer Sensor oder auch ein kapazitiver Sensor, um die exakte Position des Konturvorsprungs relativ zum Sensor exakt zu messen. Unabhängig vom Messprinzip ist der Sensor vorteilhafterweise dazu ausgebildet, die Position und/oder Bewegung eines stegförmigen Konturvorsprungs messen zu können.

Die Erfindung wird nachfolgend anhand bevorzugter Ausführungsbeispiele und zugehörigen Zeichnungen näher erläutert. In den Zeichnungen zeigen:
- Fig. 1:: ein mittenfreies Großwälzlager, dessen Lagerringe durch zwei Axiallagerreihen und eine Radiallagerreihe gegeneinander abgestützt sind, wobei zur Messung von Axialversatz der beiden Lagerringe ein Sensor radial in einem Lagerring integriert ist und einen Vorsprung an der Gegenmessfläche des anderen Lagerrings beobachtet,
- Fig. 2:: ein Großwälzlager mit einem Sensor zur Messung von Axialversatz ähnlich dem Großwälzlager aus Fig. 1, wobei der stegförmige Konturvorsprung an der Gegenmessfläche als separates Konturelement in einen Schlitz in einer Umfangsfläche des abgetasteten Lagerrings eingebracht wurde,
- Fig. 3:: ein Großwälzlager ähnlich den beiden vorhergehenden Figuren, wobei der Sensor axial eingebaut ist und,
- Fig. 4:: eine ausschnittsweise Schnittansicht eines Großwälzlagers mit einem Sensor, der eine aus verschiedenen Materialien aufgebaute Gegenmessfläche abtastet und durch die verschiedenen Konturabschnitte aus unterschiedlichen Materialien verschiedene Signalantworten generiert,
- Fig. 5:: eine ausschnittsweise Schnittansicht eines Großwälzlagers ähnlich Fig. 4, wobei die verschiedenen Konturabschnitte aus unterschiedlichen Materialien von zwei separaten Sensoren abgetastet werden,
- Fig. 6:: eine teilweise Längsschnitt- und Querschnittsansicht eines Großwälzlagers mit zwei Sensoren, die in Umfangsrichtung beabstandete Konturvertiefungen und/oder -vorsprünge abtasten, um die Drehstellung und - geschwindigkeit der Lagerringe zueinander zu messen.

Das in den Figuren gezeigte Wälzlager 1 kann als Großwälzlager ausgebildet sein, dessen Durchmesser einen oder mehrere Meter betragen kann und mittenfrei ausgebildet sein kann. Die beiden Lagerringe 2 und 3 sind relativ zueinander verdrehbar und durch mehrere Reihen von Wälzkörpern aneinander abgestützt, wobei eine oder mehrere Axiallagerreihen und eine oder mehrere Radiallagerreihe vorgesehen sein können.

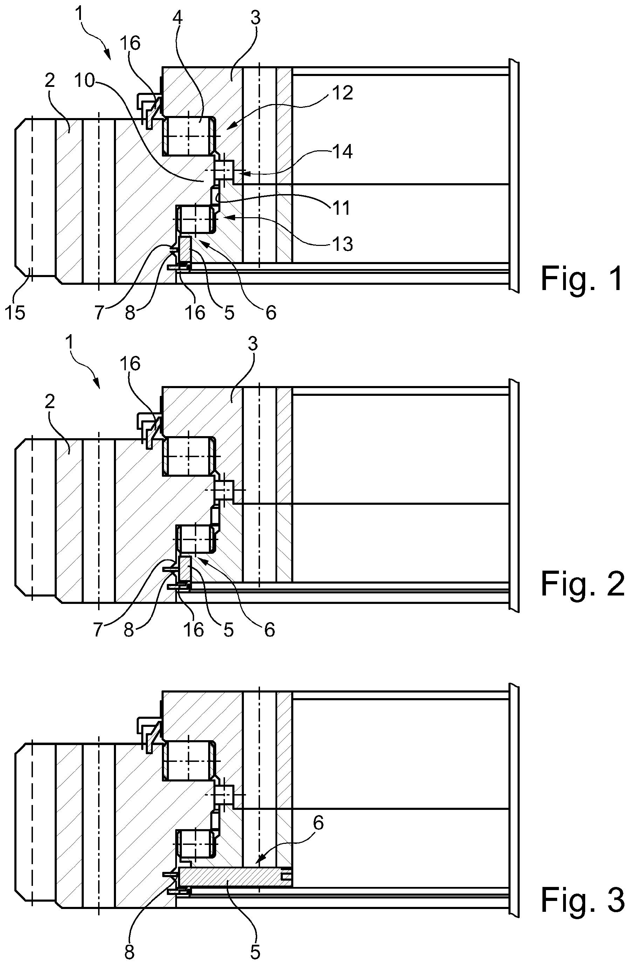

Wie die Figuren 1 bis 3 zeigen, kann beispielsweise einer der Lagerringe, beispielsweise der äußere Lagerring 2 eine zum anderen Lagerring 3, beispielsweise dem inneren Lagerring, hin vorspringenden Nasenring 10 aufweisen, der in eine Nut 11 im anderen Lagerring 3 eingreift. Die Wälzkörper 4 können im Spalt zwischen Nasenring 10 und Nut 11 angeordnet sein, wobei beispielsweise zwei Axiallagerreihen 12 und 13 und zwischen diesen beiden eine Radiallagerreihe 14 vorgesehen sein können, die den Nasenring 10 an der Nut 11 abstützen.

Einer der Lagerringe, beispielsweise der äußere Lagerring 2, kann mit einer Verzahnung 15 versehen sein, mit der das Antriebsritzel eines nicht näher dargestellten Antriebsmotors kämmen kann, um den genannten Lagerring 2 rotatorisch anzutreiben. Der andere Lagerring, beispielsweise der innere Lagerring 3 kann stehend an einem Einbauumgebungsteil befestigt sein. Der genannte Antriebsmotor kann an dem inneren Lagerring 3 oder einem daran befestigten Anschlussteil der Einbauumgebung befestigt sein, um die Verzahnung 15 anzutreiben.

Der Lagerspalt zwischen den beiden Lagerringen 2, 3 kann durch eine geeignete Dichtung 16 abgedichtet sein, wobei die Wälzkörper 4 in dem abgedichteten Lagerspalt zwischen den Dichtungen 16 laufen können.

Wie Figur 1 zeigt, ist an einem der Lagerringe, beispielsweise an dem inneren oder stehenden Lagerring 3, ein Sensor 5 befestigt, der vorteilhafterweise in dem Korpus des Lagerrings 3 versenkt angeordnet sein kann, beispielsweise in einer entsprechenden Sensoraufnahme integriert sein kann, sodass der Sensor 5 innerhalb des Lagerringkorpus bzw. innerhalb der Lagerabmessungen aufgenommen ist, insbesondere vollständig aufgenommen ist.

Wie ein Vergleich der Figuren 1 und 2 einerseits und der Figur 3 andererseits zeigt, kann der Sensor 5 radial in dem Lagerring 3 eingebaut sein, oder auch axial darin aufgenommen sein, um je nach Einbaulage die Platzverhältnisse bestmöglich auszunutzen und/oder je nach zu beobachtender Gegenmessfläche günstig angeordnet zu werden.

Wie die Figuren 1 bis 3 zeigen, kann der Sensor 5 auf einer Seite aller Wälzkörper 4 angeordnet sein, beispielsweise unterhalb aller Wälzkörper 4 oder auch oberhalb aller Wälzkörper 4. Vorteilhafterweise ist der Sensor und/oder die diesem zugeordnete Messfläche 7 innerhalb des von der Dichtung 16 abgeordneten Lagerspalts angeordnet.

Wie die Figuren zeigen, kann der Sensor 5 vorteilhafterweise mit seiner Hauptmessrichtung bzw. seiner "Blickrichtung" auf eine Gegenmessfläche 7 an dem anderen Lagerring 2 ausgerichtet sein bzw. blicken, welche Messfläche 7 vorteilhafterweise eine Umfangsfläche des anderen Lagerrings 2 sein kann. Ist der Sensor 5 am inneren Lagerring 3 befestigt, kann die Messfläche 7 eine Innenumfangsfläche des äußeren Lagerrings 2 sein.

Wie die Figuren 1 bis 3 zeigen, kann die genannte Messfläche 7 einen zum Sensor 5 hin vorspringenden Konturvorsprung 8 besitzen, der von der genannten Umfangsfläche radial zum Sensor 5 hin vorspringen kann.

Vorteilhafterweise kann der genannte Konturvorsprung 8 eine Vorsprungsleiste bilden, die sich in Umfangsrichtung erstreckt und radial von der Umfangsfläche zum Sensor 5 hin vorspringt. Der leistenförmige Konturvorsprung 8 kann sich parallel zu einer Ebene erstrecken, die senkrecht zur Lagerdrehachse ausgerichtet ist.

Wie Figur 1 zeigt, kann der genannte Konturvorsprung 8 materialhomogen, integral einstückig in das Material des Lagerrings 2 eingearbeitet sein, wobei beispielsweise beidseits des Konturvorsprungs 8 Material von dem Lagerring 2 abgenommen sein kann, um den stehen gebliebenen Steg vorspringen zu lassen.

Wie Figur 1 zeigt, kann der leistenförmige Vorsprung 8 beidseits von einer Einsenkung und/oder einer Riefe im angrenzenden Abschnitt der Umfangsfläche eingefasst sein, um den Konturvorsprung 8 bei nur begrenztem radialem Überstand über die Umfangsfläche ausreichend weit aus dem Material des Lagerrings 2 hervortreten zu lassen.

Der leistenförmige Konturvorsprung 8 kann sich über den gesamten Umfang des Lagerrings 2 oder auch nur über einen Sektor des besagten Lagerrings 2 erstrecken, wenn sich der genannte Sektor oft genug im Bereich des Sensors 5 befindet, wie dies üblicherweise bei einem Pitchlager eines Rotorblatts der Fall ist.

Wie Figur 2 zeigt, kann der Konturvorsprung 8 aber auch von einem separaten Konturelement gebildet sein, welches in das Material des Lagerrings 2 eingesetzt ist, wobei auch in diesem Fall der Konturvorsprung 8 eine schmale, sich in Umfangsrichtung erstreckende Leiste sein kann, die radial zum Sensor 5 hin vorspringt und mit einer schmalen Stirnseite dem Sensor 5 zugewandt ist. Beispielsweise kann ein solches separates Konturelement zur Bildung des Konturvorsprungs 8 in einen Schlitz eingesetzt sein, der in den Lagerring 2 eingebracht wurde und in dem das genannte Konturelement beispielsweise in Form eines Plättchens festsitzt.

Der genannte Sensor 5 kann beispielsweise ein induktiver Sensor sein, der die Position des Konturvorsprungs 8 exakt messen kann. Wird der Konturvorsprung 8 quer zur Hauptblickrichtung des Sensors 5 an diesem vorbeibewegt, wenn sich axialer Verschleiß des Wälzlagers 1 einstellt, verändert sich das Sensorsignal. Je nach Material des Konturvorsprungs 8 kann dieser das Signal passiv oder auch aktiv beeinflussen. Der genannte Sensor 5 kann aber auch nach einem anderen Prinzip arbeiten, beispielsweise ein Ultraschall-Sensor sein.

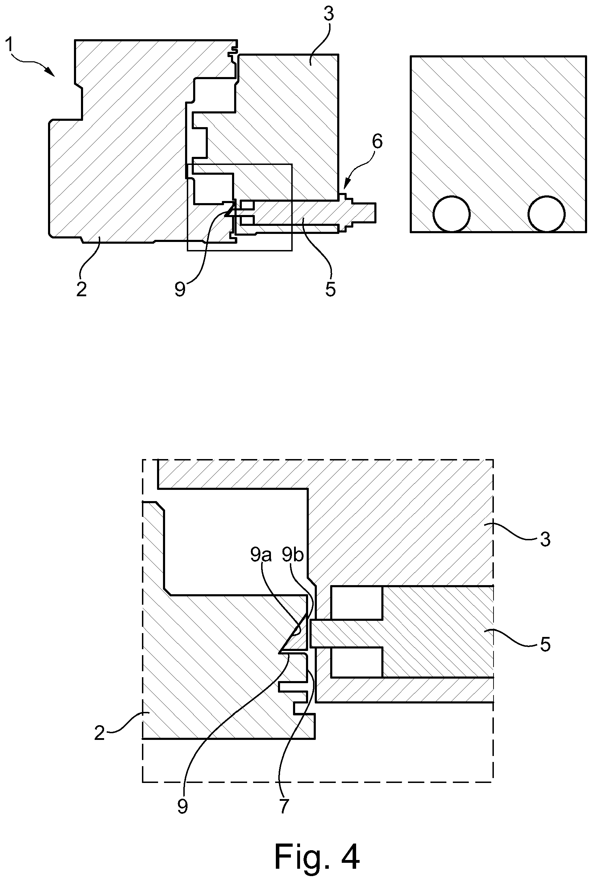

Wie Figur 4 zeigt, kann die Messfläche 7 in einer nicht beanspruchten Ausführungsform auch mit einer Konturausnehmung 9 in Form einer schmalen Längsnut versehen sein, die sich in Umfangsrichtung auf der Umfangsfläche des Lagerrings 2 erstrecken kann.

Unabhängig von der Ausbildung als Konturvorsprung oder Konturausnehmung kann es dabei vorteilhaft sein, wenn die an der Messfläche 7 ausgebildete Messkontur - in Form eines Konturvorsprungs - zwei Konturabschnitte besitzt, die aus unterschiedlichen Materialien bestehen und/oder in unterschiedlich geneigten Ebenen angeordnet sind. Diese Konturabschnitte aus unterschiedlichen Materialien und/oder in unterschiedlichen Neigungen arbeiten dabei vorteilhafterweise mit dem Sensor 5 zusammen, der unterschiedliche Neigungen und/oder unterschiedliche Materialien erkennen kann.

Wie Figur 4 zeigt, kann beispielsweise eine im Querschnitt sägezahnförmige oder dreieckförmige Nut als eine nicht erfindungsgemäße Konturausnehmung 9 vorgesehen sein, die mit einem Füllmaterial 17 zumindest teilweise verfüllt ist. Der Boden der Umfangsnut bzw. der schräg angestellte Wandungsabschnitt der Konturausnehmung 9 liefert dabei eine Signalantwort, während die im Wesentlichen senkrecht zur Hauptblickrichtung des Sensors 5 ausgerichtete Oberfläche des Füllmaterials 17 eine zweite Signalantwort generiert. Dabei kann das genannte Füllmaterial 17 zumindest teilweise signaldurchgängig ausgebildet sein, um die darunter liegende Kontur der Nut abtasten zu können.

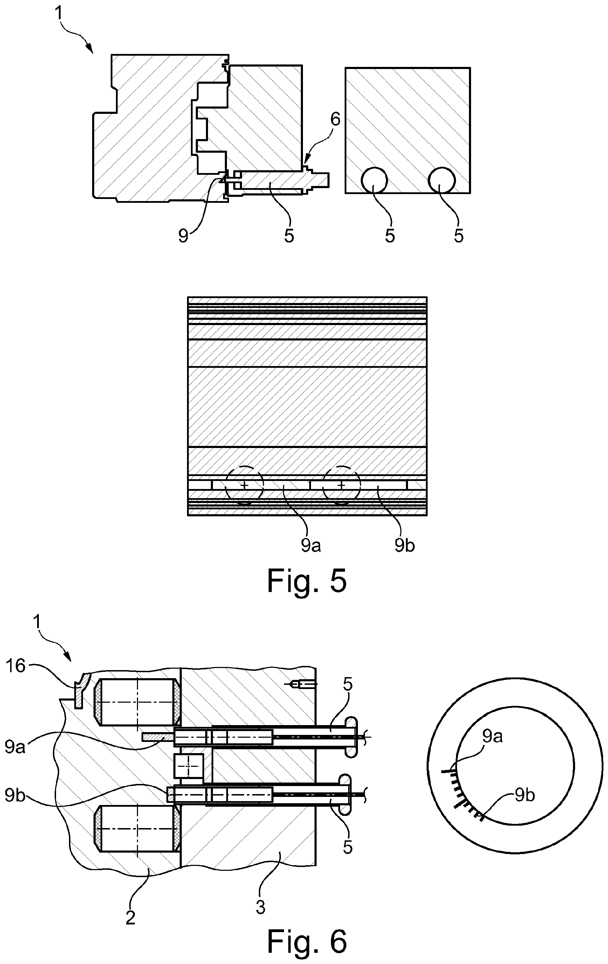

Wie Figur 5 zeigt, können auch zwei Sensoren 5 dazu vorgesehen sein, die Konturabschnitte 9a und 9b, die aus unterschiedlichen Materialien bestehen und/oder in unterschiedlichen Winkeln geneigt angestellt sind, separat abzutasten, um aus den beiden Signalantworten bzw. Sensorsignalen der beiden Sensoren eine axiale und radiale Lagebestimmung und/oder Bewegungsbestimmung der beiden Lagerringe 2 und 3 relativ zueinander vornehmen zu können.

Wie Figur 5 zeigt, können beispielsweise zwei Sensoren 5 in Umfangsrichtung zueinander versetzt an dem einen Lagerring 3 befestigt, insbesondere in diesen integriert sein. Die Gegenmessfläche 7 am anderen Lagerring 2 kann in Umfangsrichtung hintereinander abwechselnde Konturabschnitte 9a und 9b aus unterschiedlichen Materialien besitzen, auf die die beiden Sensoren 5 bzw. deren Signale entsprechend reagieren, um aus dem Signalmuster die Axialposition und Radialposition der beiden Lagerringe 2 und 3 zueinander bestimmen zu können.

Die Konturabschnitte 9a und 9b der Messfläche 7 können in die Lagerringe 2 und 3 eingearbeitet werden, oder auch darauf aufgebracht, beispielsweise aufgeklebt werden.

Figur 6 zeigt ein Ausführungsbeispiel eines Wälzlagers 1, bei dem durch einen oder mehrere Sensoren 5 die Drehstellung und/oder Drehgeschwindigkeit der beiden Lagerringe 2 und 3 zueinander gemessen werden können.

Vorteilhafterweise können an einem der Lagerringe, beispielsweise dem äußeren Lagerring 2 in Umfangsrichtung voneinander beabstandete und/oder hintereinander angeordnete Konturvorsprünge 8 vorgesehen sein, die von einem entsprechenden Sensor 5 erfasst werden können, wenn die Lagerringe 2 und 3 gegeneinander verdreht werden, sodass die Konturvorsprünge 8 an dem Sensor 5 vorbeilaufen

Dabei kann es vorteilhaft sein, wenn zwei Sätze von Konturvorsprüngen 8 vorgesehen sind, die beispielsweise in verschiedenen Ebenen angeordnet sein können, beispielsweise zwei Radialebenen senkrecht zur Lagerdrehachse, die in Axialrichtung voneinander beabstandet sind, vgl. Figur 6. Aus den Informationen der beiden Sensoren 5, die die unterschiedlichen Sätze von

Konturvorsprüngen 8 beobachten, kann die Drehstellung und/oder die Drehgeschwindigkeit exakt bestimmt werden.

Die Konturvorsprünge 8 können beispielsweise schmale, leistenförmige Vorsprünge sein, die sich in Axialrichtung erstrecken und von einer Umfangsfläche am Lagerring 2, die der Sensor 5 am Lagerring 3 beobachtet, zu dem genannten Sensor 5 hin vorspringen können. Nicht erfindungsgemäß können Konturausnehmungen 9 beispielsweise in Form von Bohrungen oder Schlitzen vorgesehen sein, die sich in Axialrichtung erstrecken und radial in die Umfangsfläche des abgetasteten Lagerrings 2 eingearbeitet sein können.

Wie die rechte Hälfte der Darstellung der Figur 6 zeigt, können die Konturvorsprünge 8 und/oder die nicht erfindungsgemäße Konturausnehmungen 9 in Umfangsrichtung voneinander beabstandet sein.

Vorteilhafterweise werden die Änderungen im Sensorsignal so umgesetzt, dass mittels zweier Messsignale eine Lage zueinander gemessen werden kann. Hierdurch kann die Drehrichtung der Lagerringe 2 und 3 zueinander bestimmt werden.

Durch eine weitere Signaländerung über den Umfang, die nur einmalig auftritt, kann beispielsweise auch die Nulllage des Systems angegeben werden.

## Patentansprüche

1. Wälzlager mit zwei Lagerringen (2, 3) und zwischen diesen laufenden Wälzkörpern (4), sowie nur einem Sensor (5) zum Erfassen von Relativbewegungen und -stellungen der Lagerringe (2, 3) zueinander, wobei der Sensor (5) zum Bestimmen von Axialbewegungen und -stellungen der Lagerringe (2, 3) zueinander vorgesehen, an einem der Lagerringe (3) befestigt und auf eine Messfläche (7) an einer Umfangsfläche des anderen Lagerrings gerichtet ist, **dadurch gekennzeichnet, dass** die genannte Messfläche (7) einen zum Sensor (5) vorspringenden, scharfkantigen Konturvorsprung (8) umfasst, der sich entlang der genannten Umfangsfläche in einer Ebene senkrecht zur Lagerdrehachse erstreckt und in Radialrichtung von der genannten Umfangsfläche vorspringt, sowie das Messsignal des Sensors (5) beeinflusst und dessen Bewegung relativ zum Sensor (5) quer zu dessen Hauptsignalrichtung dessen Messsignal verändert.

2. Wälzlager nach dem vorhergehenden Anspruch, wobei der Konturvorsprung (8) in Form einer länglichen, schmalen Leiste ausgebildet ist, die mit einer schmalen Stirnseite dem Sensor (5) zugewandt ist und von der sensorisch abgetasteten Lagerringoberfläche zum Sensor (5) hin vorspringt.

3. Wälzlager nach einem der vorhergehenden Ansprüche, wobei der Konturvorsprung (8) materialhomogen, integral einstückig aus dem Material des Lagerrings (3) ausgebildet ist.

4. Wälzlager nach einem der Ansprüche 1 bis 2, wobei der Konturvorsprung (8) zumindest teilweise von einem separaten, an dem Lagerring (3) fest angebrachten Konturelement gebildet ist.

5. Wälzlager nach einem der vorhergehenden Ansprüche, wobei der Konturvorsprung (8) zwei Konturabschnitte umfasst, die aus unterschiedlichen Materialien bestehen und unterschiedliche Sensorsignalantworten generieren.

6. Wälzlager nach dem vorhergehenden Anspruch, wobei die zwei Konturabschnitte in einer Richtung auf den Sensor (5) zu zumindest teilweise übereinander angeordnet sind, wobei zumindest einer der Konturabschnitte aus einem zumindest teilweise signaldurchgängigen Material besteht.

7. Wäzlager nach einem der beiden vorhergehenden Ansprüche, wobei die beiden Konturabschnitte in unterschiedlich geneigten und/oder zur Sensor-Hauptsignalrichtung unterschiedlich angestellten Ebenen ausgebildet sind.

8. Wälzlager nach einem der Ansprüche 5 bis 7, wobei der Sensor (5) zum Erfassen beider Konturabschnitte ausgebildet ist derart, dass der Sensor (5) für die beiden Konturabschnitte aus unterschiedlichen Materialien und/oder mit unterschiedlichen Neigungswinkeln zur Hauptsensorachse verschiedene Signalantworten generiert.

9. Wälzlager nach einem der vorhergehenden Ansprüche, wobei der Sensor (5) zum Bestimmen eines Drehwinkels und/oder einer Drehgeschwindigkeit der beiden Lagerringe (2, 3) zueinander vorgesehen ist, wobei die Messfläche (7) mehrere in Umfangsrichtung separate Konturvorsprünge (8) aufweist.

10. Wälzlager nach einem der vorhergehenden Ansprüche, wobei der Sensor (5) innerhalb des Lagering-Querschnitts und/oder innerhalb des Lagerringbauraums angeordnet, insbesondere in einem der Lagerringe versenkt ist.

11. Wälzlager nach einem der vorhergehenden Ansprüche, wobei der Sensor (5) als induktiver Sensor ausgebildet ist.

## Claims

1. A rolling bearing with two bearing rings (2, 3) and rolling elements (4) running between same, and a sensor (5) for detecting relative movements and positions of the bearing rings (2, 3) relative to one another, wherein the sensor (5) is provided for determining axial movements and positions (5) of the bearing rings (2, 3), is fastened to one of the bearing rings (3) and is directed towards a measurement surface (7) on a circumferential surface of the other bearing ring, **characterized in that** said measurement surface (7) comprises a sharp-edged contour projection (8) projecting towards the sensor (5) which extends along said circumferential surface perpendicular to the axis of rotation of the bearing and projects in radial direction from said circumferential surface and which influences the measurement signal of the sensor (5) and the movement of which relative to the sensor (5) transverse to the main signal direction of the sensor modifies the measurement signal of the sensor.

2. The rolling bearing according to the preceding claim, wherein the contour projection (8) is in the form of an elongated, narrow strip which faces the sensor (5) with a narrow end face and projects from the surface of the bearing ring scanned by the sensor towards the sensor (5).

3. The rolling bearing according to any of the preceding claims, wherein the contour projection (8) is formed materially homogeneously, integrally in a single piece from the material of the bearing ring (3).

4. The rolling bearing according to any of claims 1 to 3, wherein the contour projection (8) is configured at least partially by a separate contour element fixedly attached to the bearing ring (3).

5. The rolling bearing according to any of the preceding claims, wherein the contour projection (8) comprises two contour portions that consist of different materials and generate different sensor signal responses.

6. The rolling bearing according to the preceding claim, wherein the two contour portions are at least partially superimposed in a direction towards the sensor (5), at least one of the contour portions consisting of a material that is at least partially configured to pass through the signal.

7. The rolling bearing according to any of the two preceding claims, wherein the two contour portions are formed in planes that are differently inclined and/or differently adjusted with respect to the sensor main signal direction.

8. The rolling bearing according to any of claims 5 to 7, wherein the sensor (5) is configured to detect both contour portions in such a way that the sensor (5) generates different signal responses for the two contour portions made of different materials and/or with different angles of inclination to the main sensor axis.

9. The rolling bearing according to any of the preceding claims, wherein the sensor (5) is provided for determining a rotational angle and/or a rotational speed of the two bearing rings (2, 3) relative to one another, wherein the measurement surface (7) has a plurality of separate contour projections (8) arranged in the circumferential direction.

10. The rolling bearing according to any of the preceding claims, wherein the sensor (5) is arranged within the bearing ring cross-section and/or within the bearing ring mounting space, in particular is recessed in one of the bearing rings.

11. The rolling bearing according to any of the preceding claims, wherein the sensor (5) is configured as an inductive sensor.

## Revendications

1. Palier à roulement comportant deux bagues de palier (2, 3) et des organes de roulement (4) roulant entre celles-ci, ainsi que seulement un capteur (5) destiné à détecter des positions et déplacements relatifs des bagues de palier (2, 3) l'une par rapport à l'autre, le capteur (5) étant prévu pour déterminer des positions et déplacements axiaux des bagues de palier (2, 3) l'une par rapport à l'autre, fixé sur une des bagues de palier (3) et dirigé vers une surface de mesure (7) située sur une surface circonférentielle de l'autre bague de palier, **caractérisé en ce que** ladite surface de mesure (7) comprend une saillie de contour (8) à angles vifs faisant saillie vers le capteur (5), ladite saillie de contour s'étendant dans un plan perpendiculaire à l'axe de rotation de palier le long de ladite surface circonférentielle, faisant saillie dans la direction radiale depuis ladite surface circonférentielle et influant sur le signal de mesure du capteur (5) et le déplacement de ladite saillie de contour par rapport au capteur (5) transversalement à la direction de signal principale de celui-ci modifiant le signal de mesure dudit capteur.

2. Palier à roulement selon la revendication précédente, dans lequel la saillie de contour (8) est réalisée sous la forme d'une baguette étroite allongée qui est orientée avec une face frontale étroite vers le capteur (5) et qui fait saillie vers le capteur (5) depuis la surface de bague de palier balayée par le capteur.

3. Palier à roulement selon l'une des revendications précédentes, dans lequel la saillie de contour (8) est réalisée avec homogénéité de matériau, de manière intégrée d'un seul tenant dans le matériau de la bague de palier (3).

4. Palier à roulement selon l'une des revendications 1 à 2, dans lequel la saillie de contour (8) est formée au moins en partie d'un élément de contour séparé, monté fixement sur la bague de palier (3).

5. Palier à roulement selon l'une des revendications précédentes, dans lequel la saillie de contour (8) comprend deux parties de contour qui sont constituées de matériaux différents et qui génèrent des réponses différentes au signal du capteur.

6. Palier à roulement selon la revendication précédente, dans lequel les deux parties de contour sont disposées au moins en partie l'une par-dessus l'autre dans une direction dirigée vers le capteur (5), au moins une des parties de contour étant constituée d'un matériau laissant au moins en partie passer les signaux.

7. Palier à roulement selon l'une des deux revendications précédentes, dans lequel les deux parties de contour sont réalisées dans des plans inclinés différemment et/ou placés différemment par rapport à la direction de signal principale du capteur.

8. Palier à roulement selon l'une des revendications 5 à 7, dans lequel le capteur (5) est conçu pour détecter les deux parties de contour de telle manière que le capteur (5) génère différentes réponses au signal pour les deux parties de contour constituées de matériaux différents et/ou présentant différents angles d'inclinaison par rapport à l'axe de capteur principal.

9. Palier à roulement selon l'une des revendications précédentes, dans lequel le capteur (5) est prévu pour déterminer un angle de rotation et/ou une vitesse de rotation des deux bagues de palier (2, 3) l'une par rapport à l'autre, la surface de mesure (7) présentant plusieurs saillies de contour (8) séparées dans la direction circonférentielle.

10. Palier à roulement selon l'une des revendications précédentes, dans lequel le capteur (5) est disposé à l'intérieur de la section transversale de bague de palier et/ou à l'intérieur de l'espace de montage de bague de palier, en particulier noyé dans une des bagues de palier.

11. Palier à roulement selon l'une des revendications précédentes, dans lequel le capteur (5) est réalisé sous la forme d'un capteur inductif.
